# EUROPÄISCHE PATENTSCHRIFT

(11) **EP 2 116 778 B1**
(45) Veröffentlichungstag und Bekanntmachung des Hinweises auf die Patenterteilung: **16.03.2016**
(21) Anmeldenummer: 08008760.4
(22) Anmeldetag: 09.05.2008
(51) Int. Cl.: F24D 13/02, H05B 3/14, H05B 3/20

(54) **Beheizbares Belagsystem**
Heatable fitting system
Système de revêtement chauffable

(43) Veröffentlichungstag der Anmeldung: 11.11.2009
(73) Patentinhaber: Kronoplus Technical AG, 9052 Niederteufen (CH)
(72) Erfinder: Döhring, Dieter, Dr., 01561 Zabeltitz (DE); Macher, David, 8570 Voitsberg (AT); Kremer, Gerhard, 8280 Fürstenfeld (AT)
(74) Vertreter: Heselberger, Johannes

(56) Entgegenhaltungen:
- EP-A- 0 231 913
- EP-A1- 1 429 080
- WO-A-02/31290
- WO-A-2004/065322
- WO-A-2004/099530
- WO-A-2006/103081
- WO-A-2008/055535
- DE-A1- 3 208 428
- DE-A1- 10 052 345
- DE-U- 7 031 230
- FR-A- 2 681 753
- US-A- 4 301 356
- US-A- 4 616 125
- US-A- 4 814 580

## Beschreibung

Die vorliegende Erfindung betrifft ein beheizbares Belagsystem für Fußböden, Decken und Wände und ein Verfahren zur Herstellung dieses Belagsystems.

Zur Beheizung von Fußbodenflächen sind aus dem Stand der Technik verschiedene Verfahren bekannt. Eine weitverbreitete Fußbodenheizung besteht aus einer Anzahl von Leitungen oder Rohren, die mäanderförmig über einen Boden verlegt sind und durch die eine Heizflüssigkeit, in der Regel heißes Wasser, strömt. Auf diese Heizrohre oder Schläuche wird der eigentliche Bodenbelag, wie zum Beispiel ein Parkett oder Fliesenboden, verlegt und durch die heißen Leitungen erwärmt.

Fußbodenheizungen sind Flächenheizungen, die eine gleichmäßige und damit angenehme Wärmeverteilung ermöglichen. Herkömmliche Fußbodenheizungen wie die oben beschriebenen sind jedoch sowohl vom Materialaufwand als auch hinsichtlich ihrer Verlegung sehr aufwendig und können in der Regel nur von entsprechend geschulten Fachleuten installiert werden.

Aus dem europäischen Patent EP 105 5 087 B1 ist ein beheizbares Belagsystem für Fußböden bekannt, das aus einer Anzahl von Metallplatten besteht, in die Kanäle eingearbeitet sind. Die Metallplatten werden so auf einem Boden verlegt, dass die Kanäle untereinander verbunden sind. In diese Kanäle wird dann ein Heizkabel mäanderförmig eingelegt. Das Heizkabel ist selbstregulierend und mit einem integrierten Temperaturschutz versehen, um die Gefahr übermäßiger Erhitzung zu beseitigen. Auf die Metallplatten und das Heizkabel, das in den Kanälen innerhalb der Platten verläuft, kann dann ein herkömmlicher Fußbodenbelag, wie z.B. Keramikfliesen, verlegt werden.

Aus dem US Patent Nr. 6,737,611 B2 ist eine elektrisch leitende, thermoplastische Matte bekannt, die sich bei Anlegen einer Spannung selbst erhitzt. Die Matte besteht aus einem semikristallinen Polymer und einem elektrisch leitfähigen Füllmaterial und kann aufgrund ihrer geringen Dicke unterhalb eines Fußbodenbelags verlegt werden. Die Heizmatte ist biegsam und wird im zusammengerollten Zustand angeboten. Beim Verlegen der Heizmatte muss diese lediglich über einem Boden abgerollt, entsprechend fixiert und elektrisch angeschlossen werden.

Dokument WO 2004/099530 A1 offenbart ein beheizbares Belagssystem für Fußböden bei dem Belagplatten mit einer dekorativen Oberseite und einer Unterseite mit elektrischen Heizmitteln versehen sind und elektrische Kontaktmittel aufweisen, um die Belagplatten elektrisch miteinander verbinden zu können. Die Heizmittel bestehen aus einer elektrisch leitfähigen Heizfolie.

Dokument WO 2006/103081 A1 beschreibt eine Flächenheizeinrichtung zur Anordnung im Bodenbereich mit einer elektrisch leitfähigen Schicht, die von weiteren funktionalen Schichten umgeben ist, von denen zumindest eine Schicht eine Schalldämmschicht ist. Die elektrisch leitfähige Schicht kann aus einer Folie bestehen, die mittels eines physikalischen Vakuumabscheidungsverfahrens mit Metall oder einer Metalllegierung bedampft wurde. Alternativ kann die elektrisch leitfähige Schicht durch Beschichtung einer Trägerfolie mit Graphit und einem Bindemittel erhalten werden.

Die US 4,301,356 offenbart eine Heizeinheit, die beim Anlegen von elektrischem Strom Wärme abgibt und aus einer Matrix eines sogenannten hydraulischen Materials mit elektrisch leitfähige Fasern besteht. Das hydraulische Material soll dabei ein Material sein, welches bei einer Reaktion mit Wasser aushärtet, wie beispielsweise Zement.

Die vorliegende Erfindung ist eine Weiterentwicklung des Gegenstands der internationalen Patentanmeldung mit dem Aktenzeichen PCT/EP2006/010822. Aus dieser ist ein beheizbares Belagsystem für Fußböden, Decken und Wände mit Belagplatten, auf denen elektrische Heizmittel vorgesehen sind, bekannt Als elektrisches Heizmittel wird insbesondere eine elektrisch leitende Schicht offenbart, die als Fluid auf die Belagplatten aufgetragen ist und nach Auftragung auf den Belagplatten austrockenbar ist.

Bei einer solchen Belagplatte hat sich gezeigt, dass die elektrisch leitende Schicht zur Rissbildung neigt, was nicht nur die Optik und damit die Akzeptanz beim Kunden einer solchen Belagplatte nachteilig beeinträchtigen kann, sondern auch die Zuverlässigkeit des elektrischen Heizmittels an sich nachteilig beeinflussen kann, da bei einer sehr starken Rissbildung die elektrische Leitfähigkeit und damit die Heizleistung beeinträchtigt werden könnte. Darüber hinaus hat sich gezeigt, dass die elektrisch leitende Schicht ab einer bestimmten Schichtdicke verstärkt zur Rissbildung neigen kann.

Eine Aufgabe der Erfindung besteht darin ein verbessertes beheizbares Belagsystem für Fußböden, Decken und Wände bereitzustellen, bei dem die Belagplatten mit elektrischen Heizmitteln versehen sind, die ein elektrisch leitendes Fluid umfassen, das getrocknet bzw. ausgehärtet die leitende Schicht auf den Belagplatten bildet. Insbesondere soll durch ein erfindungsgemäßes Belagssystem die Rissbildung vermieden zumindest jedoch verringert werden. Darüber hinaus soll ein Verfahren zur Herstellung eines erfindungemäßen Belagsystems angegeben werden.

Diese und andere Aufgaben, die beim Lesen der folgenden Beschreibung noch genannt werden oder vom Fachmann erkannt werden können, werden mit einem beheizbaren Belagsystem nach Anspruch 1 und mit einem Verfahren zur Herstellung eines beheizbaren Belagsystems nach Anspruch 14 gelöst.

In einer Ausführungsform umfasst das beheizbare Belagsystem für Fußböden, Decken und Wände Belagplatten mit einer dekorativen Oberseite und einer Unterseite, wie beispielsweise Laminatfußbodenpaneele. Die Belagplatten sind dann zumindest an einer Längskante mit Kopplungsmitteln versehen, um Belagplatten miteinander verbinden zu können. Die Koppelmittel sind vorzugsweise so ausgestaltet, dass sie eine Verrastung bieten, die ein Lösen der Verbindung parallel zur Verlegebene verhindert. Die Belagplatten sind mit elektrischen Heizmitteln versehen, wobei die elektrischen Heizmittel bevorzugt ein Flächenheizmittel bereitstellen. Die Belagplatten weisen geeignet ausgebildete elektrische Kontaktmittel auf, um eine elektrische Verbindung zwischen den elektrischen Heizmitteln von zwei und mehr Belagplatten zu erlauben. Vorzugsweise sind die elektrischen Heizmittel an der Unterseite der Belagplatten angeordnet, d.h. in dem Raum zwischen den Belagplatten und dem Boden oder der Wand, der mit den Platten bedeckt werden soll.

Erfindungsgemäß umfassen die elektrischen Heizmittel zumindest eine elektrisch leitende Schicht aus einem ausgetrockneten bzw. ausgehärteten Fluid und eine Armierungslage, die zumindest teilweise in der elektrisch leitenden Schicht eingebettet ist. Vorzugsweise wird hierzu zunächst das Fluid auf die Belagplatten aufgetragen bzw. aufgebracht und anschließend wird die Armierungslage auf die noch feuchte leitende Schicht aufgebracht, so dass das Fluid zumindest teilweise in die Armierungslage eintritt, und so im trockenen ein Verbund zwischen Armierungslage und leitender Schicht vorliegt.

Die Armierungslage ist bevorzugt aus einem Vlies, Papier, Gewebe, Netzgitter oder einer Kombination hiervon gebildet. Wesentlich dabei ist, dass die Armierungslage einen gewissen Saug- bzw. Osmoseeffekt auf das die elektrisch leitende Schicht bildende Fluid hat und dadurch also eine zumindest teilweise Einbettung der Armierungslage in der elektrisch leitfähigen Schicht erfolgen kann, wenn diese beispielsweise auf die noch feuchte leitfähige Schicht aufgebracht wird.

Es wurde überraschenderweise festgestellt, dass durch die Einbettung der Armierungslage in der elektrisch leitfähigen Schicht keine wesentliche Beeinträchtigung der elektrischen Gleitfähigkeit der elektrisch leitfähigen Schicht auftritt. Dies kann eventuell damit erklärt werden, dass die Armierungslage durch den auftretenden Saug- bzw. Osmoseeffekt bevorzugt Wasser aufnimmt und nicht die die Leitfähigkeit bereitstellenden Festkörper im Fluid. Dadurch, dass die Armierungslage beim Aufbringen bevorzugt Feuchtigkeit aufnimmt (Osmose, Kapillarwirkung), ergibt sich eine zur Belagplatte größer werdende Dichte (Verteilungsgradient) von leitfähigen festen Bestandteilen des Fluids, die eben bevorzugt an der Belagplatte, genauer zwischen Belagplatte und Armierungslage, angeordnet bleiben und nicht in die Armierungslage eintreten. Bei dieser Vorgehensweise kann man daher sagen, dass die Armierungslage nur zum Teil in die elektrisch leitende Schichte eingebettet ist.

Ferner war nicht zu erwarten, dass durch die vorliegend vorgeschlagene Einbettung einer Armierungslage ein Material erhalten werden kann, das eine hervorragende Gleichverteilung der elektrischen Leitfähigkeit über die gesamte Fläche aufweist. Für eine gleichmäßige Heizleistung über die Fläche, ist es insbesondere erforderlich, dass die leitfähige Schicht sehr gleichmäßig und möglichst störungsfrei aufgetragen, getrocknet und gehärtet wird. Dieser überraschende Effekt könnte möglicherweise dadurch zu erklären sein, dass durch die vorgeschlagene Einbettung der Armierungslage eine gute Planlage der zunächst flüssigen Schicht erhalten bleibt bzw. erhalten wird.

In einer alternativen Ausführung kann das Heizmittel auch dadurch bereitgestellt werden, dass die Armierungslage mit einem geeigneten Fluid benetzt wird und die benetzte Armierungslage auf die Belagplatte aufgebracht wird. Diese vorgehensweise bietet jedoch nicht die oben genannten besonderen Vorteile.

Um diesen Effekt noch weiter zu unterstützen, können für die Armierungslage beispielsweise Stoffe mit geringen Porenweiten, in die bevorzugt Wasser eintritt, verwendet werden. Auch können beispielsweise im Fluid, das die elektrisch leitende Schicht bildet, Stoffe eingebracht werden, an denen die elektrisch leitenden Stoffe besonders gut "hafen" und wobei die Stoffe, an denen die elektrisch leitenden Stoffe haften, so groß gewählt werden, dass diese nicht in die Armierungslage einwandern können.

Ferner kann die Armierungslage selbst vor dem Aufbringen auf die elektrisch leitfähige Schicht mit einem Fluid benetzt werden, um dadurch beispielsweise die Einbettung steuern bzw. beeinflussen zu können. Wenn die Armierungslage selbst bereits vorbenetzt ist, ist der auftretende Saug- bzw. Osmoseeffekt geringer. Insbesondere können dadurch beispielsweise dickere Armierungslage verwendet werden, die ohne Vorbenetzung eine zu große Saug- bzw. Osmosewirkung aufweisen würden.

Die Armierungslage kann dabei auch selbst leitfähig ausgebildet sein oder sie kann auch mit einem aushärtbaren Fluid benetzt werden, das wiederum leitfähige Bestandteile aufweist oder Ähnliches. In diesem Fall ergibt sich eine elektrische Parallelschaltung von Armierung und elektrisch leitender Schicht.

Dadurch, dass sich die eingebettete Armierungslage mit der elektrisch leitenden Schicht verbindet, nimmt diese eventuell auftretende Zugkräfte in der elektrisch leitenden Schicht auf und verhindert oder vermindert zumindest eine Rissbildung in der elektrisch leitenden Schicht.

Durch die Armierungslage besteht darüber hinaus allgemein der Vorteil, dass sie die Verwendung von besonders dicken elektrisch leitfähige Schichten erlaubt.

In einer besonders bevorzugten Ausgestaltung ist die Armierungslage in der gesamten Ausdehnung der elektrisch leitfähigen Schicht eingebettet, insbesondere auch im Randbereich der Belagplatten, wo bevorzugterweise die elektrischen Kontaktmittel angeordnet werden, so dass dadurch auch eine Rissbildung im besonders gefährdete Übergangsbereich zu den elektrischen Kontaktmitteln vermieden werden kann. Es ist daher im Allgemeinen vorteilhaft, dass die Armierungslage den Übergangsbereich zu den elektrischen Kontaktmitteln mit abdeckt.

Bei den Belagplatten handelt es sich bevorzugt um Laminatplatten, Funierplatten oder Parkettplatten. Derartige Belagplatten werden vorzugsweise für Fußböden verwendet und sind kommerziell in einer Vielfalt von Ausführungsformen, Qualitäten und Größen erhältlich.

Wie bereits angedeutet, sind in einer bevorzugten Ausführungsform die elektrischen Kontaktmittel im Randbereich zumindest teilweise an den mechanischen Kopplungsmitteln der Belagplatten angeordnet, so dass durch Aneinanderfügen entsprechender mechanischer Kopplungsmittel zweier Belagplatten auch eine elektrische Verbindung zwischen den elektrischen Heizmitteln dieser Belagplatten herstellbar ist, um so eine möglichst einfache elektrische Verbindung zwischen zwei Belagplatten zu ermöglichen.

In einer bevorzugten Ausführungsform sind die Kopplungsmittel aus Nut- und Federelementen gebildet. Die Nut- und Federelemente sind komplementär zueinander ausgebildet, so dass eine Feder an der Längskante einer ersten Belagplatte in eine entsprechend ausgebildete Nut an der Längskante einer zweiten Belagplatte eingesetzt werden kann. Um mehrere Belagplatten miteinander verbinden zu können, sind die Kopplungsmittel vorzugsweise zumindest an zwei gegenüberliegenden Längsseiten der Belagplatten vorgesehen, wobei insbesondere immer eine Nut einer Feder gegenüberliegt. Die Kopplungsmittel erstrecken sich bevorzugt über die gesamte Länge einer Längsseite.

Um einen guten elektrischen Kontakt zu erreichen, erstrecken sich die elektrischen Kontaktmittel vorzugsweise über im Wesentlichen die gesamte Länge der Kopplungsmittel, das heißt über zumindest 60%, bevorzugt zumindest 75%, besonders bevorzugt 90% der Länge der Kopplungsmittel. Auf diese Weise ist es möglich die Belagplatten auf eine beliebige Länge zu kürzen, um sie den räumlichen Verlegeanforderungen anzupassen, ohne dass die elektrische Kontaktmöglichkeit verloren geht.

Die Kontaktmittel bestehen beispielsweise aus streifenartigen elektrisch leitenden Elementen. Sie können zum Bespiel aus einer elektrisch leitenden Metallfolie bestehen, die bespielweise aus Kupfer, Aluminium oder Edelstahl besteht. In einer weiteren beispielhaften Ausführungsform besteht die elektrisch leitende Folie aus verzinntem Kupferband.

Zur Befestigung der Kontaktmittel auf den Kopplungsmitteln können diese beispielsweise auf die Kopplungsmittel gepresst und / oder geklebt werden. Der verwendete Klebstoff ist vorteilhafterweise elektrisch leitend. Wenn die Kontaktmitteln aus streifenartigen elektrisch leitenden Elementen bestehen, werden diese vorzugsweise so auf die Kopplungsmittel aufgepresst, dass sie über Formschluss an den Kopplungsmitteln befestigt werden. Wenn die Kopplungsmittel aus komplementär ausgebildeten Nut- und Federelementen bestehen, können die streifenartigen Elemente beispielsweise um die Spitze der Feder herum gelegt bzw. gebogen oder gepresst werden. Eine vorteilhafte Klebeverbindung kann bespielweise durch ein Klebeband realisiert werden, dass vorzugsweise beidseitig klebend ist. Auf diese Weise kann das Aufkleben der Kontaktmittel auf die Kopplungsmittel erleichtert werden, in dem zum Beispiel das Klebeband zu erst an den Kontaktmitteln, wie zum Beispiel einer elektrisch leitenden Metallfolie, aufgeklebt wird, und anschließend der Verbund aus Kontaktmittel und Klebeband auf den Kopplungsmitteln angeordnet und festgeklebt wird. Selbstverständlich ist es auch hier möglich das Kontaktmittel zusätzlich mit den Kopplungsmittel zu verpressen, um eine noch bessere Verbindung zwischen Kontaktmittel und Kopplungsmittel zu erreichen.

In einer besonders vorteilhaften Ausführungsform bestehen die Kopplungsmittel aus komplementär ausgebildeten Nut- und Federelementen und die Kontaktmittel aus elektrisch leitenden Metallfolien. Die Innenseiten der unteren Flanken der Nutelemente sind dabei zumindest teilweise von einer elektrisch leitenden Metallfolie bedeckt. Bei den Federelementen sind zumindest teilweise die unteren Seiten der Federelemente mit einer Metallfolie bedeckt. Wenn nun zwei Belagplatten mit komplementär ausgebildeten Nut- und Federelementen mechanisch miteinander verbunden werden, indem die Feder der einen Belagplatte in die Nut der anderen Belagplatte eingeführt wird, so wird auf diese Weise gleichzeitig und ohne zusätzlichen Aufwand eine elektrische Verbindung zwischen den zwei Belagplatten erreicht. Sobald die Feder einer Belagplatte in die komplementär ausgebildete Nut einer weiteren Belagplatte eingefügt wird, wird nämlich automatisch und gleichzeitig die elektrische Verbindung über die elektrisch leitenden Metallfolien hergestellt, die sich innerhalb der Nut der einen Platte und zumindest teilweise auf der Feder der anderen Platte befinden.

Die elektrischen Heizmittel für Belagplatten können besonders gut mit den oben offenbarten Kontaktmitteln zusammenwirken. Die Heizmittel können jedoch auch mit anderen, herkömmlichen Kontaktmitteln zusammenwirken. Wie oben angeführt, bilden die elektrischen Heizmittel der Belagplatten vorzugsweise eine Flächenheizung. Diese kann an der Oberseite oder der Unterseite der Belagplatten angeordnet sein, vorteilhafterweise ist sie jedoch an der Unterseite der Belagplatte angeordnet. Wenn hier im Folgenden von Ober- und Unterseite der Belagplatte die Rede ist, sollte es klar sein, dass dies nicht zwangsläufig bedeutet, dass die elektrischen Heizmittel als einzige Schicht an Unter- oder Oberseite der Belagplatte angeordnet sind oder das sie direkt an Unter- oder Oberseite angeordnet sein müssen. Vielmehr können weitere Schichten, insbesondere Dekorschichten und abriebfeste Schichten an der Oberseite und Schichten zur Trittschalldämmung oder Schichten zur thermischen Isolierung an der Unterseite, vorgesehen sein.

Die elektrische Flächenheizung kann neben der elektrisch leitfähige Schicht zusätzlich elektrische Widerstandsdrähte oder Ähnliches umfassen, die die Heizleistung der elektrisch leitenden Schicht unterstützen. Die Widerstandsdrähte können beispielsweise in Form eines Gewebes aus dünnen leitenden Kupferdrähten bestehen, die sich bei entsprechender elektrischer Beaufschlagung erwärmen.

Die elektrisch leitende Schicht wird bevorzugt mittels Sprühlackierung, Rollenbeschichtung, Rakelbeschichtung, Siebdruckbeschichtung oder Inkjet-Beschichtung oder einer Kombination dieser Verfahren flüssig bzw. fließfähig aufgetragen. In einer bevorzugten Ausführungsform besteht das elektrisch leitende Fluid aus Graphitlack oder Karbonlack. Derartige Lacke können kommerziell zum Beispiel von der Firma CRC Industries GmbH, Deutschland bezogen werden. Ebenso ist es beispielsweise möglich das Fluid mit Karbon- oder Graphitteilchen zu versehen, um die elektrische Leitfähigkeit zu verstärken und / oder um das Fluid elektrisch leitfähig zu machen. In einer weiteren vorteilhaften Ausführungsform enthält das Fluid nanoskalige, elektrisch leitfähige Teilchen oder sogenannte Multiwalled Carbon Nano Tubes. Vorteilhafterweise enthält das Fluid 5 bis 60 %, besonders bevorzugt zwischen 20 bis 50 % Feststoffe. Dies können die angeführten leitfähigen Bestandteile sein aber auch Füllstoffe und andere Funktionsstoffe, wie beispielsweise Fließhilfsmittel oder dergleichen. Je weniger Flüssigkeit bzw. umso mehr feste Bestandteile im Fluid enthalten sind, umso weniger zeitaufwendig gestaltet sich der anschließende Trocknungsprozess. Jedoch können bestimmte Applikationen auch einen hohen Flüssigkeitsgehalt erfordern.

In einem besonders bevorzugtem Beispiel wird ein Fluid verwendet, das wenigstens die Folgenden Bestandteile aufweist:
- 5 bis 50 Teile eines Bindemittels auf Acrylatharzbasis, das eine wässrige Dispersion sein kann,
- 0,1 bis 1 Teile eines Dispergierhilfsmittels,
- 5 bis 50 Teile eines Grafits mit einer mittleren Teilchengröße von 2 bis 20 µm und
- ggf. ein organisches Verdickungsmittel, um die Viskosität einstellen zu können.

Wobei die Mischung insbesondere so ausgelegt ist, dass diese mit Wasser auf 100 Teile aufgefüllt wird.

Optional besteht allgemein die Möglichkeit, die Dispersion zusätzlich einem Mahlprozess zu unterziehen, beispielsweise mittels einer Perlmühle. Dadurch kann die Dispersion falls erforderlich zusätzlich homogenisiert werden, um bessere elektrische Eigenschaften zu erhalten. Der Feststoffgehalt der Dispersion beträgt vorzugsweise 5 bis 60 %, besonders bevorzugt 20 bis 50 %.

Je nach Applikation ist es bevorzugt zwischen 50 bis 400 g/m² oder zwischen 100 bis 300 g/m² oder zwischen 150 bis 200 g/m² Fluid auf die Belagplatten aufzubringen.

Die Energieversorgung sollte mit einer Wechselspannung von kleiner als 42 V erfolgen, insbesondere mit einer Spannung von 38 Volt. Dabei ist die elektrische Leistungsaufnahme vorzugsweise nicht größer als 120 Watt pro m². Ein Belagsystem, welches mit den elektrischen Heizmitteln versehen ist, ist vorzugsweise mit einer automatischen Temperaturregelung ausgestattet. Die Temperaturregelung hält dabei die Oberflächentemperatur der Belagplatte im Bereich von 18°C bis 32°C.

Um die Effektivität eines Belagsystems mit den offenbarten elektrischen Heizmitteln zu erhöhen, ist unterhalb der Heizmittel vorzugweise eine Isolierlage zur Wärmedämmung angeordnet. Die Isolierlage zur Wärmedämmung besteht zum Beispiel aus einem elektrisch nicht leitenden Vlies. Als Material für die wärmedämmende Isolierlage sind praktisch alle wärmedämmenden Materialien geeignet, die üblicherweise im Innenausbau und bei der Verlegung von Fußböden verwendet werden. Dabei sind auch elektrisch leitende Materialien denkbar, die dann jedoch in geeigneter Weise von dem Heizsystem und elektrischen Kontaktmitteln elektrisch isoliert sein müssen. Dies kann zum Beispiel durch eine weitere elektrisch nicht leitende Schicht geschehen, die zwischen Isolierlage und eventuell angrenzenden elektrischen Kontaktmitteln oder elektrischen Heizmitteln angeordnet wird. In einer beispielhaften Ausführungsform ist unterhalb der Heizmittel eine Isolierlage zur Wärmedämmung angeordnet, die aus einem elektrisch nicht leitenden Non-woven Vlies mit mehr als 1 mm, bevorzugt zwischen 1,5 bis 3,5 mm Dicke besteht.

Die elektrische Heizung sollte einen Flächenwiderstand von 25 bis 500 Watt pro m², insbesondere 60 bis 120 Watt pro m², besonders bevorzugt 80 Watt pro m² aufweisen.

In einer vorteilhaften Ausführungsform sind die Unterseiten der Belagplatten mit einer schallabsorbierenden Schicht versehen. Aus dem Bereich der Laminat-, Furnier- und Parkettböden sind dem Fachmann hierfür eine Reihe von schallabsorbierenden Materialien und Verlegverfahren bekannt. Die schallabsorbierende Schicht kann dabei zum Beispiel zwischen der Unterseite der Belagplatte und der elektrischen Heizschicht angeordnet sein. In einer vorteilhaften Weiterbildung umfasst die Belagplatte sowohl eine schallabsorbierende Schicht als auch eine wärmeisolierende Schicht. Von der Unterseite der Belagplatte ausgehend weist diese dann vorteilhaft folgendes Schichtsystem auf: eine schallabsorbierende Schicht; eine elektrische Flächenheizung, das heißt umfassend zumindest eine elektrisch leitende Schicht, in der eine Armierungslage zumindest teilweise eingebettet ist und eine wärmeisolierende Schicht.

Die Armierungslage wird bevorzugt mittels einer aufliegenden Walze ohne zusätzlichen Anpressdruck, bevorzugt bei einer Temperatur zwischen 15 bis 85 °C, besonders bevorzugt zwischen 18 bis 25°C aufgewalzt. Das Aufwalzen kann dabei direkt nach dem Aufbringen des Fluids mit einer bevorzugten Geschwindigkeit von 10 - 250 m/Min bzw. mit einer besonders bevorzugten Geschwindigkeit von 60 - 90 m/Min aufgewalzt werden.

Um beispielsweise eine elektrisch leitende Schichten zu erhalten, können beispielsweise 200 g/m² einer wässrigen leitfähigen Dispersion bevorzugt mit 48 % Feststoffgehalt mittels einer Gießmaschine gleichmäßig insbesondere auf ein bereits mit seitlichen Kontaktstreifen versehenes Paneel aufgetragen werden. Auf diese flüssige Schicht wird von oben kommend ein Papiervlies nur durch das Eigengewicht mit einer Flächenmasse von beispielsweise 57 g/m², insbesondere einer Saughöhe von 95 mm (nach Klemm, ISO 8787) und einer bevorzugten Dichte von 222 kg/m³ aufgelegt. Durch das sofortige Aufsaugen des Wassers erfolgt eine gleichmäßige vollflächige Auflage ohne Lufteinschlüsse. Vorteilhafterweise, jedoch optional, durchläuft das Paket anschließend eine Mangelpartie, bei der eine Rolle ein leichtes Anwalzen des Vlieses bewirkt. Dies hat den Vorteil, dass die beim Gießen eventuell auftretenden Wülste im Bereich der seitlichen Kontaktstreifen gut egalisiert werden können. Anschließend wird das Paket einer Trocknung zugeführt, die so ausgelegt ist, dass die Temperatur bevorzugt im Einlauf 40 °C und im Trocknerendbereich 130 °C beträgt. Die Trocknerlänge ist so ausgelegt, dass die Verweilzeit bevorzugt 9 min. beträgt. Das Papiervlies wird dabei innig und irreversibel mit der darunter liegenden Schicht verbunden ohne dass jedoch leitfähiger Festkörper auf der Vliesrückseite durch Durchschlagen angesammelt wird.

Wird die Vliesschicht mechanisch schichtweise abgetragen, so kann die Einbettung und die armierende Wirkung des Vlieses erkannt werden. Beispielsweise konnten optisch keine Risse in der Oberfläche festgestellt werden. Eine Vergleichsprobe ohne Vliesabdeckung weist bei gleich ausgeführtem Trocknungsprozess eine deutliche Rissbildung auf, vor allem im Bereich der Kontaktstreifen aber auch in der gesamten Fläche.

Erstaunlicherweise ist die beschriebene Einbettung ausreichend, um zumindest die beim Trocknungsprozess auftretenden Schrumpf und Spannungsrisse im Wesentlichen vollständig zu vermeiden.

Im Folgenden wird nun eine detaillierte Beschreibung der Figuren gegeben.
Figur 1 zeigt eine schematische Querschnittsansicht einer Belagplatte mit einer zusätzlichen Isolierschicht;
Figur 2 zeigt eine schematische Querschnittsansicht einer Belagplatte mit einer Reihe von weiteren Schichten;
Figur 3 ist eine schematische Darstellung des Schichtaufbaus einer Ausfuhrungsform einer Belagplatte;
Figur 4 ist eine schematische Darstellung eines Belagsystems;
Figur 5 ist eine weitere schematische Darstellung eines Belagsystems; und
Figur 6 ist eine schematische Darstellung eines alternativen elektrischen Kontaktmittels.

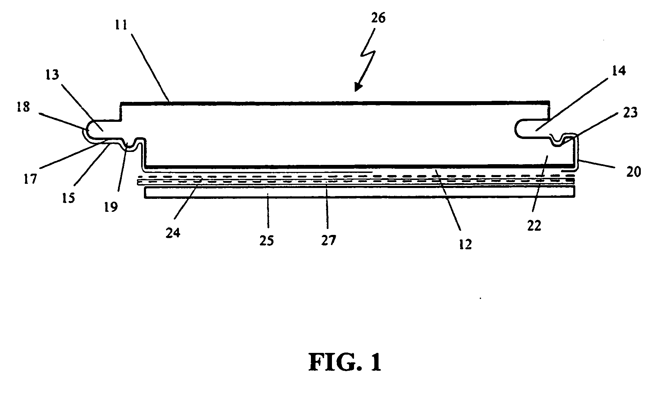

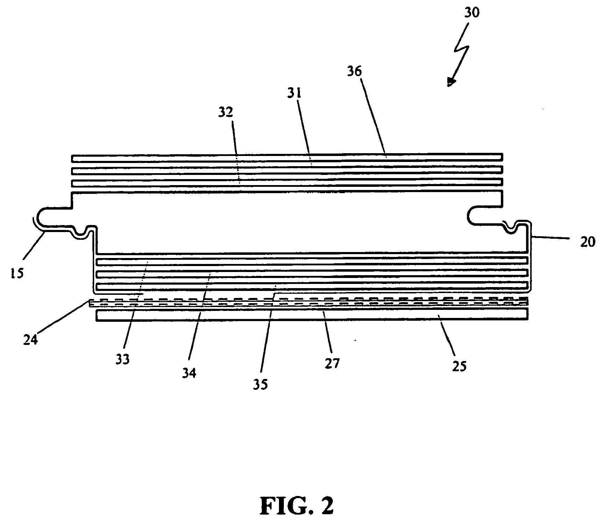

In Figur 1 ist eine schematische Querschnittsansicht einer beispielhaften Belagplatte 26 gezeigt, die zur Verwendung in einem Belagsystem vorgesehen ist. Die beispielhaften Belagplatten 26 bzw. 30 der Figuren 1 und 2 sind Laminatpaneele für einen Fußboden. Derartige Laminatpaneele haben im Allgemeinen eine rechteckige Form, wobei die beiden Längskanten mit Nut- und Federverbindungselementen versehen sind. Die kurzen Querseiten einer derartigen Belagplatte können ebenfalls mit ähnlichen oder auch anderen Kopplungsmitteln versehen sein. Auf diese Weise sind alle vier Kanten der Belagplatte mit Kopplungsmitteln versehen, so dass diese in einem Belagssystem an allen vier Seiten mit weiteren Belagplatten verbunden werden kann, um so eine größere Fläche abdecken zu können. Die Belagplatte 26 hat eine Oberseite 11 und eine Unterseite 12. Die Oberseite 11 kann mit weiteren Schichten aus unterschiedlichen Materialien bedeckt sein. Im Falle eines Laminatpaneels ist dies üblicherweise mindestens eine Dekorschicht bestehend aus einem bedruckten Spezialpapier und einer darüber angeordneten Overlay-Schicht, die besonders abriebfest ist und als Schutzschicht dient. An der Unterseite 12 können ebenfalls weitere Schichten angeordnet sein, wie zum Beispiel Schichten zur Schalldämmung oder Schichten zur Wärmeisolierung. An den beiden Längsseiten der Belagplatte 26 sind Kopplungsmittel in der Form von Feder 13 und Nut 14 eingerichtet. Feder und Nut sind komplementär zueinander ausgebildet, so dass, wenn zwei Belagplatten 26 miteinander verbunden werden sollen, eine Feder 13 der einen Belagplatte in eine Nut 14 der anderen Belagplatte eingeführt werden kann. Die dargestellte Ausbildung von Feder und Nut ist rein exemplarisch und es sind aus dem Stand der Technik eine Vielzahl von verschiedenen Feder- und Nutformen bekannt, die ebenfalls mit der vorliegenden Erfindung zusammenwirken können.

In der in Figur 1 gezeigten Ausführungsform ist die Feder 13 mit einem Kontaktmittel 15 in der Form eines dünnen Kontaktstreifens versehen, der sich an der Unterseite der Feder 13 befindet und sich bis zur Unterseite der Belagplatte 26 erstreckt. Die untere Flanke der Nut 14 ist mit einem weiteren Kontaktmittel 20 versehen, dass sich ebenfalls bis zur Unterseite der Belagplatte 26 erstreckt. In der Ausführungsform von Figur 1 bedecken die Kontaktmittel die Kopplungsmittel, d.h. Feder und Nut, nur teilweise. Wie aus Figur 1 jedoch klar zu erkennen ist, wird trotzdem eine elektrische Verbindung zwischen zwei Belagplatten hergestellt, wenn die Feder 15 einer Belagplatte in eine komplementär ausgebildete Nut 14 einer weiteren Belagplatte eingesetzt wird, da im vorliegenden Fall zumindest der Verriegelungsvorsprung an der Feder und die Verriegelungsnut in der unteren Flanke der Nut 14 von den Kontaktmitteln bedeckt sind. Das Kontaktmittel 15 ist beispielsweise ein dünner Streifen eines elektrisch leitfähigen Materials, wie zum Beispiel ein dünner Kupferstreifen. Der Streifen ist bevorzugt so dünn bzw. flexibel, dass er ohne großen Aufwand um die Kontur der Feder oder der Nut herum gebogen werden kann. Der Streifen 15 erstreckt sich vorzugsweise über die gesamte Länge der Feder, d.h. über die gesamte Länge der Längsseite der Belagplatte 26, wenn sich die Feder über die gesamte Länge erstreckt. An der Unterseite der Belagplatte 26 befindet sich ein elektrisches Heizmittel 24, dass in Kontakt mit den Kontaktmitteln 15,20 ist

Die Feder 13 ist an ihrer unteren Seite 17 mit einem Verriegelungsvorsprung 19 versehen, der sich vorzugsweise über die gesamte Länge der Feder und damit über die gesamte Länge der Längskante der Belagplatte 26 erstreckt. Die komplementär ausgebildete Nut 14 auf der gegenüberliegenden Seite der Belagplatte 26 weist eine obere Flanke 21 auf und eine untere Flanke 22. In der unteren Flanke 22 verläuft eine Verriegelungsnut 23, vorzugsweise ebenfalls über die gesamte Länge der unteren Flanke 22. Wie aus Figur 1 zu erkennen ist, ist die untere Flanke 22 etwas länger als die obere Flanke 21. Auf diese Weise wird das Einführen der Feder 13 in die Nut 14 erleichtert, wenn zwei Belagplatten 26 mit komplementär ausgebildeten Nut- und Federelementen miteinander verbunden werden. Beim Einführen der Feder in die Nut wird der Verriegelungsvorsprung 19 in die vorzugsweise komplementär ausgebildete Verriegelungsnut 23 in der unteren Flanke 22 der Nut 14 eingepresst. Auf diese Weise können zwei geeignet ausgebildete Belagplatten besonders sicher miteinander verbunden werden, da ein Lösen der Verbindung in der Verlegeebene verhindert wird. Eine derartige Verbindung ist allgemein bei allen erfindungsgemäßen hier beschriebenen Ausführungsformen denkbar und bevorzugt. Da sich, wie abgebildet, die Kontaktmittel 15 bzw. 20 an den Kopplungsmitteln, d.h. der Feder sowie der Nut, befinden, wird beim mechanischen Verbinden zweier Belagplatten automatisch auch eine elektrische Verbindung zwischen den elektrischen Kontaktmitteln 15 und 20 hergestellt. Da die Kontaktmittel wiederum in elektrischer Verbindung mit den elektrischen Heizmitteln 24 stehen, die an Ober- und / oder Unterseite der Belagplatten angeordnet sind, wie es im Folgenden erläuterte werden wird, entsteht so auf einfache Weise auch eine elektrische Verbindung zwischen den jeweiligen elektrischen Heizmitteln. Es sind also keine zusätzlichen Handgriffe oder Werkzeuge nötig, um zusätzlich zu der mechanischen Verriegelung zweier Belagplatten auch den elektrischen Kontakt zwischen diesen Platten herzustellen. Ein derartig ausgebildetes Belagsystem kann daher auch von einem Laien verlegt werden.

Das elektrische Heizmittel stellt eine Flächenheizung bereit und ist durch eine elektrisch leitende Schicht 24 (gestrichelt dargestellt) und einem darin eingebetteten Papiervlies 27 gebildet. Die elektrisch leitende Schicht 24 wird als Fluid aufgetragen und besteht zum Beispiel aus Graphitlack oder Karbonlack oder einer Mischung davon. Das Fluid, das nach der Trocknung die elektrisch leitende Schicht 24 bildet, wird bevorzugterweise nachdem die Belagplatten mit den elektrischen Kontaktmitteln versehen wurden, auf die Unterseite der Belagplatte aufgetragen, wobei in diesem Fall die elektrisch leitfähigen Schicht auch über die Kontaktmittel aufgetragen wird. Das Auftragen der elektrisch leitfähigen Schicht kann beispielsweise mittels einer Sprühlackierung, Rollenbeschichtung, Rackelbeschichtung, Siebdruckbeschichtung oder Ink-Jet-Beschichtung oder auch einer Kombination dieser Verfahren geschehen, wobei besonders ein Gießverfahren bevorzugt wird, mit dem zwischen 10 g/m² bis 350 g/m², besonders bevorzugt zwischen 120 g/m² bis 250 g/m² des Fluids aufgegossen wird und wobei das Fluid zwischen 30 bis 80 % Feststoffe enthält. Um die elektrische Leitfähigkeit eines solchen Fluids zu erhöhen, kann dieses mit Karbon oder Grafitteilchen versehen werden.

In die elektrisch leitende Schicht ist ein die Armierungslage bildendes Papiervlies 27 eingebettet. Das Papiervlies 27 wird dabei auf die noch nasse elektrische leitende Schicht, also auf das Fluid aufgewalzt. Das Papiervlies 27 nimmt dabei Flüssigkeit vom Fluid auf und trocknet mit diesem als Verbund aus. Bevorzugt wird das Papiervlies 27 auch über die elektrischen Kontaktmittel aufgebracht bzw. aufgewalzt. Eine Trocknung erfolgt vorteilhafterweise in mehreren Stufen, beginnend mit einer niedrigen Temperatur von ca. 60 bis 100°C, um schließlich bei ca. 120 bis 130°C endgültig getrocknet zu werden.

Unterhalb des elektrischen Heizmittels befindet sich eine optionale Abdeckung bzw. Wärmedämmungsschicht 25, die beispielsweise aus einem elektrisch nicht leitenden Vlies oder einer Fasermatte bestehen kann. Um eine gute Verbindung der Schichten zu ermöglichen, kann diese wärmeisolierende Schicht beispielsweise mit dem Heizmittel verklebt bzw. verleimt und an kalandriert werden. Der oben beschriebene Aufbau des Heizmittels kann selbstverständlich auch mit anderen bzw. konventionellen Kontaktmitteln mit Strom versorgt werden, wobei die hier beschriebenen Kontaktmittel jedoch bevorzugt sind.

In Figur 2 ist eine schematische Querschnittsansicht einer weiteren Ausführungsform einer Belagplatte 30 abgebildet. An der Oberseite der Belagplatte 30 sind schematisch drei Schichten angedeutet. Die oberste Schicht besteht aus einem Overlay 36, beispielsweise einem Papier, das mit einem Phenolharz und abriebfesten Partikeln, wie zum Beispiel Korundpartikeln, versehen ist und als Schutzschicht dient. Die mittlere Schicht ist eine Dekorlage 31, wie sie typischerweise bei Laminatpaneelen verwendet wird, um Paneelen das Aussehen eines Echtholzparketts zu geben. Darunter befindet sich eine obere Kernlage 32.

Auch an der Unterseite der Belagplatte 30 befindet sich ein Schichtsystem. Die erste Schicht an der Unterseite der Belagplatte 30 ist eine untere Kernlage 33. Darunter befindet sich ein Gegenzugpapier 34, das einen Verzug des Laminatpaneels, d.h. der Belagplatte 30, verhindern soll. Darunter befindet sich eine Schallabsorptionsschicht 35 von typischerweise 0,3 mm Dicke. Die elektrischen Kontaktmittel 15 und 20 erstrecken sich teilweise über die Unterseite der Belagplatte 30 und liegen teilweise auf der Schallschutzschicht 35. Unterhalb der Schallschutzschicht 35 ist wieder ein elektrisches Heizmittel in der Form einer Flächenheizung angeordnet. Die Flächenheizung besteht auch hier aus einer elektrisch leitenden Schicht 24 und aus einem darin eingebetteten Papiervlies 27. Aus Figur 2 ist gut zu erkennen, wie die Enden der Kontaktmittel 15, 20 in Kontakt mit der Flächenheizung sind. Unterhalb der Flächenheizung ist ähnlich wie in Figur 1 eine optionale Wärmedämmungsschicht 25 angeordnet. Es ist dem Fachmann selbstverständlich klar, dass alle Schichten üblicherweise fest miteinander verbunden sind, um so eine Belagplatte mit einer Dicke von wenigen Millimetern zu bilden.

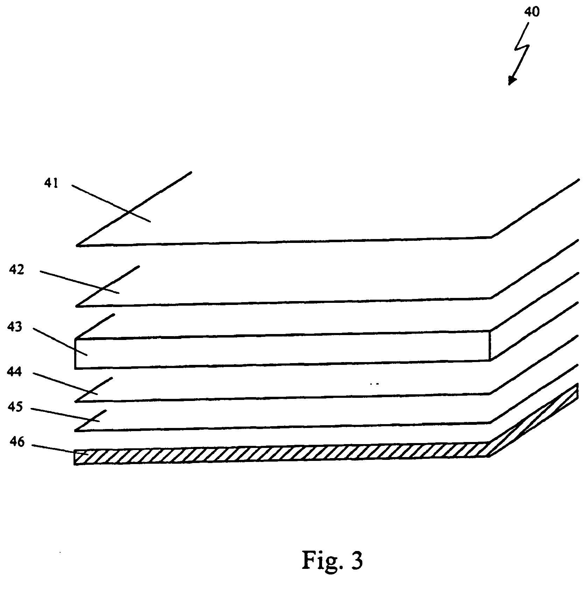

In Figur 3 ist schematisch der Aufbau eines weiteren Laminatpaneels 40 gezeigt. Mit dem Bezugszeichen 43 ist eine Trägerplatte aus beispielsweise HDF oder MDF Material gekennzeichnet, die den eigentlichen strukturellen Kern des Laminatpaneels 40 bildet. Die oberste Schicht wird aus einem Overlay bzw. Dekorpapier 41 gebildet. Darunter ist ein Heizmittel in der Form einer elektrischen Flächenheizung 42, wie oben beschrieben eine elektrisch leitfähige Schicht umfassend eine darin eingebettetes Papiervlies, angeordnet, d.h. zwischen HDF-Trägerplatte und dem Overlay bzw. Dekorpapier 41. Unterhalb der Trägerplatte 43 ist eine Kernlage aus Natronpapier 44 angeordnet. Darunter befindet sich wieder ein Gegenzugpapier 45 und darunter eine Schallabsorptionsschicht 46. Wie es dem Fachmann sofort klar sein wird, können die elektrischen Kontaktmittel auch ein derartiges Laminatpaneel elektrisch verbinden, bei dem die Heizmittel 42 auf der Oberseite des Paneels angeordnet sind. Zu diesem Zweck müssen die Kontaktmittel wie sie in Figur 1 abgebildet sind lediglich bis zur Oberseite der Belagplatte weiter geführt werden, so dass sie in Kontakt mit dem Heizmittel sind. In diesem Fall ist es dann jedoch nicht notwendig, dass sich die Kontaktmittel bis zur Unterseite der Belagplatte erstrecken.

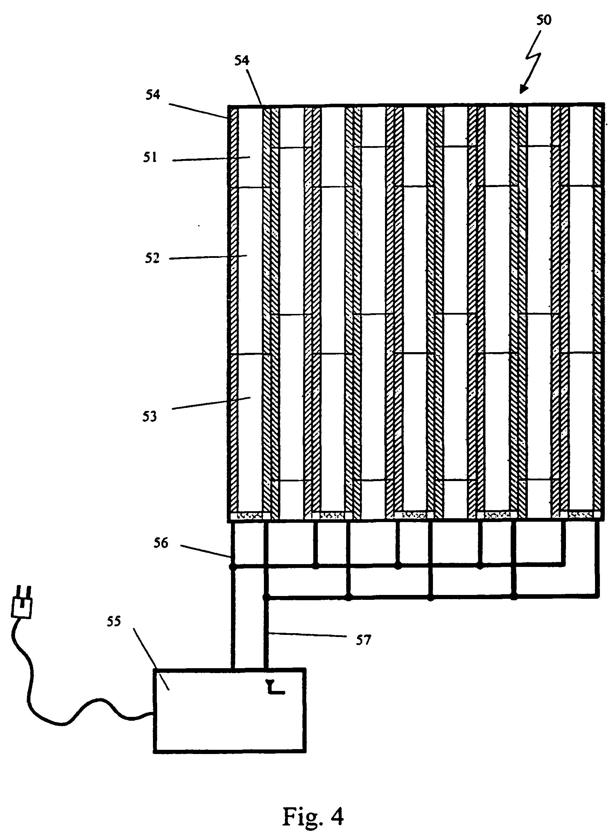

In Figur 4 ist schematisch ein beheizbares Belagsystem 50 dargestellt. Das Belagsystem 50 besteht aus einer Anzahl von Belagplatten, wie zum Beispiel den Belagplatten 51, 52 und 53. Wie aus Figur 4 zu erkennen ist, sind die Belagplatten an ihren Rändern mit elektrischen Kontaktmittel 54 versehen, die sich im Wesentlichen über die gesamte Längsseite der Belagplatten erstrecken. Wie gut zu erkennen ist, sind einige der Belagplatten kürzer als andere, um das Belagsystem in seiner Form den jeweiligen Begebenheiten in zum Beispiel einem Raum, in dem das Belagssystem verlegt werden soll, anzupassen. Da sich die elektrischen Kontaktmittel über die gesamte Längsseite der Belagplatten erstreckt, können die Belagplatten einfach zurechtgeschnitten werden, ohne dass dies negative Auswirkungen auf die elektrische Verbindbarkeit der Platten hat. Darüber hinaus verhindert die in die elektrisch leitende Schicht eingebettete Armierungslage dass die elektrisch leitende Schicht beim Zuschneiden abblättert oder abspringt. Mit Bezugszeichen 55 ist ein Elektromodul angedeutet, dass die elektrische Stromversorgung für das beheizbare Belagsystem 50 bereitstellt. Ein derartiges erfindungsgemäßes Belagsystem hat unter anderem den Vorteil, dass es aufgrund der einfachen elektrischen Verbindbarkeit der elektrischen Heizmittel auch von einem Laien verlegt werden kann.

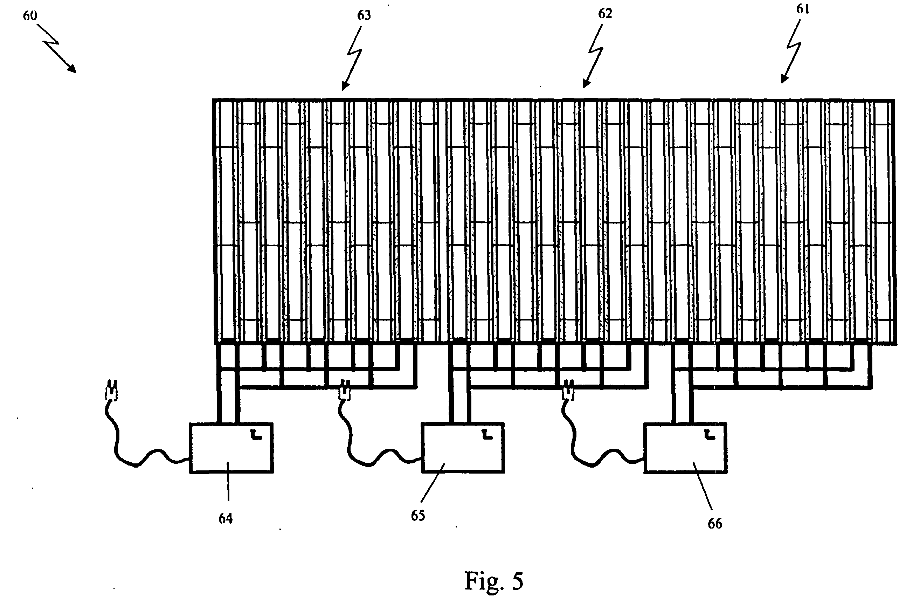

In Figur 5 ist ein Belagsystem 60 dargestellt, dass aus einer Anzahl von drei separaten Belagssystemen 61, 62 und 63 aufgebaut ist, die jeweils über eine eigene Stromversorgung 64, 65 bzw. 66 verzügen. Der modulare Aufbau des Belagssystems 60 erlaubt die Verwendung von mehreren kleineren Stromversorgungsgeräten 64, 65, 66, anstelle eines einzelnen großen Geräts. Auf diese Weise können Trenntransformatoren mit einer typischen Leistung von einigen 100 Watt, beispielsweise 700 Watt verwendet werden, die auch von Laien ohne besondere Ausbildung angeschlossen bzw. installiert werden können. Bei einer typischen Flächenleistung von einigen 10 Watt pro m² bis zu etwa 100 Watt pro m² können mit einem solchen Kleintransformator zum Beispiel 10 m² Fläche versorgt werden. Außerdem können die Stromversorgungsgeräte mit einer Fernbedienung und / oder mit Temperatursensoren ausgestattet werden, um den Betrieb und die Anhabung des beheizbaren Belagssystems zu erleichtern.

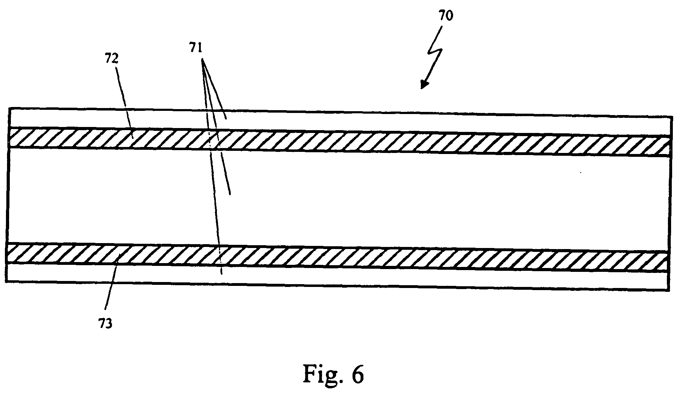

In Figur 6 ist eine schematische Darstellung eines alternativen elektrischen Kontaktmittels dargestellt. Figur 6 zeigt schematische eine Belagplatte 70 von ihrer Unterseite gesehen. Die Belagplatte 70 ist mit einer elektrischen Flächenheizung 71 versehen, die gemäß den oben offenbarten elektrischen Heizmitteln ausgebildet ist, also aus einer elektrischen Flächenheizung 71, die aus einer elektrisch leitenden Schicht eines elektrisch leitfähigen Graphit- oder Karbonlacks gebildet ist, in die ein die Armierungslage bildendes Papiervlies eingebettet ist. Auf der Flächenheizung 71 sind zwei elektrische Kontaktmittel 72 und 73 angeordnet. Die Kontaktmittel 72 und 73 bestehen beispielsweise aus einem dünnen leitfähigen Metallstreifen, der fest mit der elektrischen Flächenheizung 71 verbunden, beispielsweise verklebt ist. Das Papiervlies kann dabei entweder über den Kontaktmitteln 72 und 73 angeordnet werden, so dass auch die Kontaktmittel im Papiervlies eingebettet werden oder zwischen der elektrisch leitenden Schicht und den Kontaktmitteln 72 und 73 vorgesehen sein, wobei ein elektrischer Kontakt zwischen der elektrisch leitenden Schicht und den Kontaktmitteln 72 und 73 zu gewährleisten ist. Auch auf diese alternative Weise können die hierin beschriebenen elektrischen Heizmittel mit Strom versorgt werden. Dem Fachmann ist es jedoch klar, dass es noch weitere Alternativen geben wird, die ebenfalls mit den elektrischen Heizmitteln zusammenwirken können.

In Perioden, in denen nicht geheizt wird, kann ein Wechselstromsystem in sehr niedriger Leistung oder intervallmäßig betrieben werden, wodurch Korrosionseffekte aufgrund von Feuchtigkeit oder galvanischer Potentialdifferenzen in elektrisch leitenden Kontaktmitteln vermieden werden können. Diese Art des vorbeugenden Schutzes ist insbesondere beim Betrieb mit Gleichstrom zu empfehlen.

Die Anbringung der elektrischen Kontaktmittel auf den Kopplungsmitteln kann auf verschiedene Weise erfolgen. Beispielsweise können Kontaktstreifen aus dünnem Kupfer oder Aluminium oder Edelstahl verwendet werden, die mit einer Klebebeschichtung versehen sind, die vorzugsweise elektrisch leitende Eigenschaften aufweist. Dabei kann zuerst die Flächenheizschicht aufgebracht werden und anschließend die elektrischen Kontaktmittel oder umgekehrt. Als Materialien für die elektrischen Kontaktmittel kommt zum Beispiel eine leitende Kupferfolie in Betracht, wie zum Beispiel das "Conductor Copper Fuel Tape" VE1691 der Firma D&M International, A-8451 Heimschuh. Weitere Materialien sind zum Beispiel von der Firma 3M Electrical Products Division, Austin, Texas, USA erhältlich, wie zum Beispiel der Typ 1183.

In einer alternativen Herstellungsweise wird zum Beispiel auf die Unterseite eines Laminatpaneels am Rand in Längsrichtung eine elektrisch leitende dünne Folie, wie zum Beispiel eine Kupfer- oder Aluminium- oder Edelstahlfolie mit Wahlweise einer geeigneten Oberflächenbeschichtung appliziert. Anschließend wird die dünne Folie an oder auch um die Kopplungsmittel gepresst. Die Pressung erfolgt vorzugsweise so, dass keine Stufe am Übergang zwischen Folie und Plattenoberfläche gegeben ist. Anschließend kann ein Flächenheizelement auf die Unterseite der Platte aufgebracht werden, wobei das Flächenheizelement in Kontakt mit zumindest einem Teil der Folie gerät. Der elektrische Kontakt zwischen Folie und Heizmittel kann durch eine zusätzliche Anpressung verbessert werden. Die Kontaktstreifen können zusätzlich verzinnt oder vernickelt ausgeführt werden.

Das die elektrisch leitende Schicht bildende Fluid kann auch in Form einer elektrisch leitfähigen Paste bzw. Farbe oder Lack mit geeigneter Viskosität und Trocknungseigenschaften aufgebracht werden. Entscheidend dabei ist lediglich, dass in das die elektrisch leitende Schicht bildende Fluid eine Armierungslage so eingebracht werden kann, dass diese in der ausgehärteten Schicht eingebettet vorliegt. Beispielsweise können Karbon oder Graphitpigmente mit einer polymeren Matrix verwendet werden. Da eine derartige Heizschicht selbst nur wenige Mikrometer dick ist, spielen unterschiedliche Wärmeausdehnungen zwischen Heizschicht und den übrigen Komponenten der Belagplatte kaum eine Rolle.

## Patentansprüche

1. Beheizbares Belagsystem für Fußböden, Decken und Wände, umfassend
- Belagplatten (26) mit einer dekorativen Oberseite (11) und einer Unterseite (12), insbesondere Laminatplatten, Furnierplatten oder Parkettplatten; wobei
- die Belagplatten mit elektrischen Heizmitteln (24) versehen sind und elektrische Kontaktmittel (15) aufweisen, um Belagplatten elektrisch miteinander verbinden zu können, und wobei
- die elektrischen Heizmittel (24) auf einem elektrisch leitenden Fluid basieren, welches als trockene elektrisch leitende Schicht vorliegt, und wobei
das Fluid im flüssigen Zustand auf die Belagplatten aufgebracht wird, **dadurch gekennzeichnet, dass** - die Belagplatten an zumindest einer Längskante mit Kopplungsmitteln (13, 14) versehen sind, um Belagplatten miteinander verbinden zu können, und wobei die elektrischen Heizmittel (24) weiter zumindest eine Armierungslage (27) umfassen, die zumindest teilweise in der elektrisch leitenden Schicht eingebettet ist, wobei die Armierungslage bevorzugt ein Vlies, Papier, Gewebe oder ein Netzgitter ist.

2. Beheizbares Belagsystem nach Anspruch 1, **dadurch gekennzeichnet, dass** die elektrischen Kontaktmittel (15) zumindest teilweise an den Kopplungsmitteln (13, 14) angeordnet sind, so dass durch Ineinanderfügen entsprechender Kopplungsmittel zweier Platten eine elektrische Verbindung zwischen diesen Platten herstellbar ist.

3. Beheizbares Belagsystem nach Anspruch 1 oder 2, **dadurch gekennzeichnet, dass** die Armierungslage (27) aus Zellstoff- und/oder Baumwollfasern besteht und insbesondere eine Flächenmasse von 10 bis 600 g/m², bevorzugt 30 - 90 g/m² aufweist.

4. Beheizbares Belagsystem nach einem der Ansprüche 1 bis 3, **dadurch gekennzeichnet, dass** die Kopplungsmittel (13, 14) aus komplementär ausgebildeten Nut- und Feder-Elementen bestehen, wobei die Kopplungsmittel zumindest an zwei gegenüberliegenden Längsseiten der Belagplatten (26) vorgesehen sind.

5. Beheizbares Belagsystem nach einem der vorhergehenden Ansprüche, **dadurch gekennzeichnet, dass** sich die Kontaktmittel (15) über im Wesentlichen die gesamte Länge der Kopplungsmittel (13, 14) erstrecken und / oder die Kontaktmittel aus streifenartigen elektrisch leitenden Elementen bestehen und / oder die Kontaktmittel aus einer elektrisch leitenden Metallfolie bestehen, wobei die leitenden Metallfolie insbesondere aus Kupfer, Aluminium oder Edelstahl und / oder aus einem verzinnten Kupferband besteht.

6. Beheizbares Belagsystem nach einem der vorhergehenden Ansprüche, **dadurch gekennzeichnet, dass** die Kontaktmittel (15) auf die Kopplungsmittel (13, 14) gepresst und / oder aufgeklebt sind und / oder das die Kontaktmittel mittels eines Klebebandes an den Kopplungsmitteln befestigt sind.

7. Beheizbares Belagsystem nach einem der vorhergehenden Ansprüche, **dadurch gekennzeichnet, dass** die Kopplungsmittel (13, 14) aus komplementär ausgebildeten Nut- und Feder-Elementen und die Kontaktmittel (15) aus elektrisch leitenden Metallfolien bestehen, wobei die Metallfolien zumindest teilweise die Innenseite der unteren Flanke der Nut und zumindest teilweise die untere Seite der Feder bedecken.

8. Beheizbares Belagsystem nach einem der vorhergehenden Ansprüche, **dadurch gekennzeichnet, dass** die elektrisch leitende Schicht (24) aus Graphitlack oder Carbonlack oder einer Mischung daraus besteht, wobei das nach Aushärtung die elektrisch leitende Schicht bildende Fluid mit Carbon oder Graphit-Teilchen versehen ist und / oder das Fluid nanoskalige elektrisch leitfähige Teilchen oder Multi-Walled-Carbon-Nano-Tubes enthält, um die elektrische Leitfähigkeit zu verstärken und / oder um das Fluid elektrisch leitfähig zu machen.

9. Beheizbares Belagsystem nach einem der vorhergehenden Ansprüche, **dadurch gekennzeichnet, dass** die Armierungslage (27) einen Saug- bzw. Osmoseeffekt auf das die elektrisch leitende Schicht bildende Fluid hat.

10. Beheizbares Belagsystem nach einem der vorhergehenden Ansprüche, **dadurch gekennzeichnet, dass** die Armierungslage (27) nur zum Teil in die trockene Schicht eingebettet ist.

11. Beheizbares Belagsystem nach einem der vorhergehenden Ansprüche, **dadurch gekennzeichnet, dass** das die Energieversorgung (55) mit einer Wechselspannung kleiner als 42 Volt, insbesondere mit 38 Volt erfolgt und / oder dass eine Leistungsaufnahme von 120 Watt/m² nicht überschritten wird, wobei das Belagsystem insbesondere eine automatische Temperaturregelung umfasst, die die Oberflächentemperatur der Belagplatten insbesondere in einem Bereich von 18°C bis 32°C hält und wobei die elektrische Flächenheizung insbesondere einen Flächenwiderstand von 100 bis 500 Ohm/Quadrat, insbesondere 250 bis 300 Ohm/Quadrat aufweist.

12. Beheizbares Belagsystem nach einem der vorhergehenden Ansprüche, **dadurch gekennzeichnet, dass** die Unterseite (12) der Belagplatte (26) mit einer schallabsorbierenden Schicht versehen ist, wobei die schallabsorbierende Schicht insbesondere zwischen der Unterseite der Belagplatte und dem elektrischen Heizmittel angeordnet ist und / oder dass von der Unterseite der Belagplatte ausgehend folgendes Schichtsystem vorliegt:
- eine schallabsorbierende Schicht;
- ein elektrisches Heizmittel (24), umfassend die zumindest teilweise eingebetteten Armierungslage (27);
- eine wärmeisolierende Schicht.

13. Beheizbares Belagsystem nach einem der vorhergehenden Ansprüche, **dadurch gekennzeichnet, dass** das elektrisch leitende Fluid im flüssigen Zustand auf die Belagplatten (26) aufgebracht und die Armierungslage (27) auf das noch feuchte Fluid aufgebracht wird, um dadurch die Armierungslage zumindest teilweise in die elektrisch leitende trockene Schicht einzubetten.

14. Verfahren zur Herstellung eines beheizbaren Belagsystems für Fußböden, Decken und Wände, umfassend die Schritte:
- Bereitstellen einer Belagplatte mit dekorativer Oberseite und einer Unterseite, insbesondere einer Laminatplatte, Furnierplatte oder Parkettplatte;
- Bereitstellen eines elektrisch leitfähigen Fluids, das insbesondere mit Carbon oder Graphit-Teilchen versehen ist und / oder nanoskalige elektrisch leitfähige Teilchen oder Multi-Walled-Carbon-Nano-Tubes enthält;
- Auftragen des elektrisch leitenden Fuids auf die Belagplatte (26), insbesondere mittels eines Gießverfahrens, einer Sprühlackierung, einer Rollenbeschichtung, einer Rakelbeschichtung, einer Siebdruckbeschichtung oder einer InkJet-Beschichtung oder einer Kombination dieser Verfahren, wobei insbesondere zwischen 10 bis 350 g/m², insbesondere zwischen 120 bis 250 g/m² Fluid auf die Belagplatte aufgebracht wird;
- Aufbringen einer Armierungslage (27), insbesondere ein Vlies, Papier, Gewebe oder ein Netzgitter auf das noch nicht ausgehärtete elektrisch leitende Fluid, wobei die Armierungslage bevorzugt aufgewalzt wird und insbesondere irreversibel mit dem Fluid verklebt wird, wobei das Aufbringen der Armierungslage bevorzugt bei einer Temperatur zwischen 15 bis 85°C erfolgt, insbesondere wird die Armierungslage mit einer Geschwindigkeit von 10 bis 250 m/Min, bevorzugt zwischen 60 bis 90 m/Min. aufgebracht;
- Trocknung der Belagplatte, insbesondere bei einer Temperatur von bis zu 130°C.

15. Beheizbares Belagsystem für Fußböden, Decken und Wände hergestellt nach Anspruch 14.

## Claims

1. Heatable covering system for floors, ceilings and walls, comprising:
- covering panels (26) with a decorative upper side (11) and a lower side (12) in particular laminate panels, veneer panels or parquet panels; wherein
- the covering panels are provided with electrical heating means (24) and comprise electrical contact means (15) so that the covering panels can be electrically interconnected; and wherein
- the electrical heating means (24) are based on an electrically conductive fluid, which exists as an dry electrically conductive layer; and wherein
- the fluid is applied on the covering panels in a liquid state, **characterized in that** the covering panels are provided at at least one longitudinal side with coupling means (13, 14) so that the covering panels can be interconnected, and wherein the electrical heating means (24) further comprise at least one reinforcement layer (27), which is at least partially embedded in the electrically conductive layer, wherein the reinforcement layer is preferably a fleece, paper, web or grid.

2. Heatable covering system according to claim 1, **characterized in that** the electrical contact means (15) are at least partially arranged at the coupling means (13, 14), so that an electrical connection can be established between two plates by joining the corresponding coupling means of the two plates.

3. Heatable covering system according to claim 1 or 2, **characterized in that** the reinforcement layer (27) is made of fibers of cellulose and/or cotton wool and particularly comprises an area density of 10 to 600 g/m², preferably 30 - 90 g/m².

4. Heatable covering system according to one of the claims 1 to 3, **characterized in that** the coupling means (13, 14) consist of complementary constructed groove and tongue elements, wherein the coupling means are provided at least at two opposite longitudinal sides of the of the covering panels (26).

5. Heatable covering system according to any one of the preceding claims, **characterized in that** the contact means (15) essentially extend to the whole length of the coupling means (13, 14) and/or the contact means consist of strip-like electrically conductive elements and/or the contact means consist of an electrically conductive metal foil, wherein the conductive metal foil particularly consists of copper, aluminum or stainless steel and/or of a tinned copper strip.

6. Heatable covering system according to any one of the preceding claims, **characterized in that** the contact means (15) are pressed onto the coupling means (13, 14) and/or glued onto the coupling means and/or the contact means are attached to the coupling means via an adhesive tape.

7. Heatable covering system according to any one of the preceding claims, **characterized in that** the coupling means (13, 14) consist of complementary constructed groove and tongue elements and the contact means (15) consist of electrically conductive metal foils, wherein the metal foils at least partially cover the inner surface of the lower flank of the groove and at least partially cover the lower side of the tongue.

8. Heatable covering system according to any one of the preceding claims, **characterized in that** the electrically conductive layer (24) consists of graphite lacquer or carbon lacquer or a mixture thereof, wherein the fluid, forming the electrically conductive layer after curing, is provided with carbon or graphite particles and/or the fluid comprises electrically conductive nanoscale particles or Multi-Walled-Carbon-Nano-Tubes to increase the electrical conductivity and/or to make the fluid electrically conductive.

9. Heatable covering system according to any one of the preceding claims, **characterized in that** the reinforcement layer (27) has a suction- or osmotic effect on the fluid, forming the electrically conductive layer.

10. Heatable covering system according to any one of the preceding claims, **characterized in that** the reinforcement layer (27) is only partially embedded in the dry layer.

11. Heatable covering system according to any one of the preceding claims, **characterized in that** the power supply (55) has an alternating voltage of less than 42 volts, in particular with 38 volts and/or a power input of 120W/m² is not exceeded, in particular wherein the covering system comprises an automatic temperature regulation which keeps the surface temperature of the covering panels in a range of 18°C to 32°C and in particular wherein the electrical panel heating comprises a surface resistivity of 100 to 500 Ohm/square, in particular 250 to 300 Ohm/square.

12. Heatable covering system according to any one of the preceding claims, **characterized in that** the lower side (12) of the covering panel (26) is provided with a sound-absorbing layer, in particular wherein the sound-absorbing layer is arranged between the lower side of the covering panel and the electrical heating means and/or the following system of layers is present, as it is seen from the lower side of the covering panel:
- a sound-absorbing layer;
- electrical heating means (24), comprising the at least partially embedded reinforcement layer (27);
- a heat insulating layer.

13. Heatable covering system according to any one of the preceding claims, **characterized in that** the electrically conductive fluid is applied in a liquid state on the covering panels (26) and the reinforcement layer (27) is applied on the still wet fluid in order to embed the reinforcement layer, at least partially, in the electrically conductive dry layer.

14. Method for producing a heatable covering system for floors, ceilings and walls, comprising the following steps:
- providing a covering panel with a decorative upper side and a lower side, in particular with a laminate panel, veneer panel or parquet panel;
- providing an electrically conductive fluid, which is in particular provided with carbon or graphite particles and/or comprises electrically conductive nanoscale particles or Multi-Wall-Carbon-Nano-Tubes;
- applying the electrically conductive fluid on the covering panel (26), in particular via a casting method, a spray coating, a roll coating, a squeegee coating, a screen coating or an InkJet coating or a combination of these methods, in particular wherein 10 to 350 g/m², in particular between 120 to 250 g/m² of fluid is applied on the covering panel;
- applying a reinforcement layer (27), in particular a fleece, paper, web or grid on the not yet cured electrically conductive fluid, preferably wherein the reinforcement layer is rolled on and in particular irreversibly glued with the fluid, preferably wherein the application of the reinforcement layer is performed at a temperature of 15 to 85°C, in particular the reinforcement layer is applied at a speed of 10 to 250 m/min, preferably at a speed of 60 to 90 m/min;
- drying the covering plate, in particular at a temperature up to 130°C.

15. Heatable covering system for floors, ceilings and walls, produced according to claim 14.

## Revendications

1. Système de revêtement chauffant pour planchers, plafonds et murs, comprenant
- des panneaux de revêtement (26) avec une face supérieure décorative (11) et une face inférieure (12), en particulier des panneaux stratifiés, des panneaux contreplaqués ou des panneaux de parquet ;
- les panneaux de revêtement étant munis de moyens chauffants électriques (24) et comportant des moyens de contact électrique (15) pour pouvoir relier électriquement des panneaux de revêtement entre eux, et
- les moyens chauffants électriques (24) fonctionnant avec un fluide électriquement conducteur qui se présente sous la forme d'une couche sèche électriquement conductrice et
- le fluide étant appliqué sur les panneaux de revêtement à l'état liquide,
**caractérisé en ce que** les panneaux de revêtement sont pourvus de moyens de couplage (13, 14) sur au moins une arête longitudinale pour pouvoir relier des panneaux de revêtement entre eux, et **en ce que** les moyens chauffants électriques (24) comportent en outre au moins une couche d'armature (27) qui est noyée au moins partiellement dans la couche électriquement conductrice, la couche d'armature étant de préférence un non-tissé, un papier, un tissu ou une grille.

2. Système de revêtement chauffant selon la revendication 1, **caractérisé en ce que** les moyens de contact électrique (15) sont disposés au moins partiellement sur les moyens de couplage (13, 14), de sorte qu'en emboîtant l'un dans l'autre des moyens de couplage correspondants de deux panneaux une liaison électrique entre ces panneaux peut être établie.

3. Système de revêtement chauffant selon la revendication 1 ou 2, **caractérisé en ce que** la couche d'armature (27) est constituée de fibres de cellulose et/ou de coton et présente en particulier une masse surfacique de 10 à 600 g/m², de préférence de 30 à 90 g/m².

4. Système de revêtement chauffant selon une des revendications 1 à 3, **caractérisé en ce que** les moyens de couplage (13, 14) sont constitués d'éléments à rainure et languette de conformation complémentaire, les moyens de couplage étant prévus au moins sur deux grands côtés opposés des panneaux de revêtement (26).

5. Système de revêtement chauffant selon une des revendications précédentes, **caractérisé en ce que** les moyens de contact (15) s'étendent sur sensiblement toute la longueur des moyens de couplage (13, 14) et/ou les moyens de contact sont constitués par des éléments électriquement conducteurs en forme de bandes et/ou les moyens de contact sont constitués par une feuille métallique électriquement conductrice, la feuille métallique conductrice étant constituée en particulier de cuivre, d'aluminium ou d'acier fin et/ou d'une bande de cuivre étamée.

6. Système de revêtement chauffant selon une des revendications précédentes, **caractérisé en ce que** les moyens de contact (15) sont pressés sur les moyens de couplage (13, 14) et/ou collés sur ceux-ci et/ou **en ce que** les moyens de contact sont fixés aux moyens de couplage au moyen d'un ruban adhésif.

7. Système de revêtement chauffant selon une des revendications précédentes, **caractérisé en ce que** les moyens de couplage (13, 14) sont constitués par des éléments à rainure et languette de conformation complémentaire et les moyens de contact (15) sont constitués par des feuilles métalliques électriquement conductrices, les feuilles métalliques couvrant au moins partiellement le côté intérieur du flanc inférieur de la rainure et au moins partiellement le côté inférieur de la languette.

8. Système de revêtement chauffant selon une des revendications précédentes, **caractérisé en ce que** la couche électriquement conductrice (24) est constituée de vernis au graphite ou de vernis au carbone ou d'un mélange de ceux-ci, le fluide qui forme après durcissement la couche électriquement conductrice étant pourvu de particules de carbone ou de graphite et/ou le fluide contenant des particules électriquement conductrices à nano-échelle ou des nanotubes de carbone multiparoi afin de renforcer la conductibilité électrique et/ou de rendre le fluide électriquement conducteur.

9. Système de revêtement chauffant selon une des revendications précédentes, **caractérisé en ce que** la couche d'armature (27) produit un effet d'aspiration, respectivement d'osmose sur le fluide formant la couche électriquement conductrice.

10. Système de revêtement chauffant selon une des revendications précédentes, **caractérisé en ce que** la couche d'armature (27) n'est noyée qu'en partie dans la couche sèche.

11. Système de revêtement chauffant selon une des revendications précédentes, **caractérisé en ce que** l'alimentation en énergie (55) s'effectue avec une tension alternative inférieure à 42 volts, en particulier de 38 volts, et/ou **en ce qu'**une consommation de puissance de 120 watts/m² n'est pas dépassée, le système de revêtement comprenant en particulier une régulation automatique de température qui maintient la température de surface des panneaux de revêtement en particulier dans une plage de 18 °C à 32 °C, et le chauffage électrique surfacique présentant en particulier une résistivité de surface de 100 à 500 ohms/carré, en particulier de 250 à 300 ohms/carré.

12. Système de revêtement chauffant selon une des revendications précédentes, **caractérisé en ce que** la face inférieure (12) du panneau de revêtement (26) est pourvue d'une couche phono-absorbante, la couche phono-absorbante étant disposée en particulier entre la face inférieure du panneau de revêtement et le moyen chauffant électrique et/ou **en ce qu'**à partir de la face inférieure du panneau de revêtement on a le système de couches suivant :
- une couche phono-absorbante ;
- un moyen chauffant électrique (24) comprenant la couche d'armature au moins partiellement noyée (27),
- une couche thermo-isolante.

13. Système de revêtement chauffant selon une des revendications précédentes, **caractérisé en ce que** le fluide électriquement conducteur est appliqué à l'état liquide sur les panneaux de revêtement (26), et la couche d'armature (27) est appliquée sur le fluide encore humide afin de noyer ainsi la couche d'armature au moins partiellement dans la couche sèche électriquement conductrice.

14. Procédé de fabrication d'un système de revêtement chauffant pour planchers, plafonds et murs, comprenant les étapes consistant à :
- fournir un panneau de revêtement avec face supérieure décorative et une face inférieure, en particulier un panneau stratifié, un panneau contreplaqué ou un panneau de parquet ;
- fournir un fluide électriquement conducteur qui est pourvu en particulier de particules de carbone ou de graphite et/ou contient des particules électriquement conductrices à nano-échelle ou des nanotubes de carbone multiparoi ;
- appliquer le fluide électriquement conducteur sur le panneau de revêtement (26), en particulier au moyen d'un procédé de coulée, d'un vernissage par pulvérisation, d'une enduction au rouleau, d'une enduction à la racle, d'une enduction sérigraphique ou d'une enduction à jet d'encre ou d'une combinaison de ces procédés, en particulier entre 10 et 350 g/m², en particulier entre 120 et 250 g/m² de fluide étant appliqués sur le panneau de revêtement ;
- poser une couche d'armature (27), en particulier un non-tissé, un papier, un tissu ou une grille sur le fluide électriquement conducteur non encore durci, la couche d'armature étant de préférence appliquée par laminage et en particulier collée de manière irréversible avec le fluide, l'application de la couche d'armature s'effectuant de préférence à une température comprise entre 15 et 85 °C, en particulier la couche d'armature étant appliquée à une vitesse de 10 à 250 m/min, de préférence comprise entre 60 et 90 m/min ;
- sécher le panneau de revêtement, en particulier à une température pouvant atteindre 130 °C.

15. Système de revêtement chauffant pour planchers, plafonds et murs fabriqué selon la revendication 14.
